**Europäisches Patentamt**

**European Patent Office**

**Office européen des brevets**

(19)

(11) Veröffentlichungsnummer: **0 154 140**
**A2**

# (12) EUROPÄISCHE PATENTANMELDUNG

(21) Anmeldenummer: 85100699.9

(22) Anmeldetag: 24.01.85

(51) Int. Cl.⁴: **A 61 G 3/00**
**B 60 H 1/24**

(30) Priorität: 29.02.84 DE 3407298

(43) Veröffentlichungstag der Anmeldung:
11.09.85 Patentblatt 85/37

(84) Benannte Vertragsstaaten:
AT DE FR NL

(71) Anmelder: Binz GmbH & Co
Postfach 1120
Zollstrasse 2 D-7073 Lorch(DE)

(72) Erfinder:
Der Erfinder hat auf seine Nennung verzichtet

(74) Vertreter: Manitz, Gerhart, Dr. Dipl.-Phys. et al,
MANITZ, FINSTERWALD & ROTERMUND
Seelbergstrasse 23/25
D-7000 Stuttgart 50(DE)

(54) Vorrichtung zum Druckausgleich in einem Krankentransportfahrzeug.

(57) Um einen Druckausgleich in der Fahrerkabine beim Zuschlagen der Türen zu ermöglichen, kann die Fahrerkabine über eine Klappenanordnung (2) entlüftet werden. Die Klappenanordnung ist bevorzugt innerhalb einer die Fahrerkabine vom Krankentransportraum abteilenden Trennwand (1) angeordnet, so daß der Druckausgleich der Fahrerkabine über den Krankentransportraum erfolgt, welcher eine gesonderte Entlüftung besitzt. Letztere ist bei Personenkraftwagen, welche die Basis des Krankentransportfahrzeuges bilden können, in der Regel serienmäßig vorhanden.

FIG. 1

Croydon Printing Company Ltd.

Krankentransportfahrzeug

Die Erfindung betrifft ein Krankentransportfahrzeug
mit vom Krankentransportraum durch Zwischenwand abgetrennter und durch separate Schwenkflügeltür bzw.
-türen von außen zugänglicher Fahrerkabine.

Bei derartigen Krankentransportfahrzeugen lassen sich
die Türen der Fahrerkabine oftmals schwer schließen,
weil beim Zuschlagen der jeweils letzten Tür innerhalb
der Fahrerkabine ein Überdruck entsteht, welcher die
Tür abbremst.

Bei Personenkraftwagen sind deshalb in der Regel Klappen
od.dgl. vorhanden, welche eine Entlüftung des Fahrzeuginnenraumes nach außen gestatten und dementsprechend
einen Überdruck beim Zuschlagen von Türen verhindern.
Derartige Klappenanordnungen sind beispielsweise im
DE-U 17 63 725 beschrieben.

Zwar werden Krankentransportfahrzeuge oftmals auf der
Basis größerer Personenkraftwagen durch Umbau derselben
hergestellt. Jedoch sind die bei derartigen Personenkraftwagen in der Regel in einem hinteren Karosseriebereich,
insbesondere in den hinteren Seitentüren, angeordneten
Klappenanordnungen nach Umbau des Personenkraftwagens
zu einem Krankentransportfahrzeug nicht mehr für den
Druckausgleich der Fahrerkabine geeignet, da dieselbe
durch die Trennwand von dem hinteren Karosseriebereich
abgeteilt ist.

Aufgabe der Erfindung ist es nun, eine Anordnung zu
schaffen, bei der die Druckentlastung der Fahrerkabine
mit besonders geringem zusätzlichen herstellungsmäßigen
Aufwand ermöglicht wird.

Diese Aufgabe wird dadurch gelöst, daß die Fahrerkabine zum Druckausgleich beim Zuschlagen der Schwenkflügeltür bzw. -türen über zumindest eine Öffnung entlüftbar ist, welche in der Trennwand und/oder zumindest einer die Trennwand abstützenden Karosseriesäule - z.B. die B-Säule hinter der Fahrer- bzw. Beifahrertür - angeordnet ist und in den Krankentransportraum bzw. die Säule mündet.

Die Besonderheit der Erfindung besteht also unter anderem darin, daß die Entlüftungsöffnung für die Fahrerkabine in der Trennwand, und damit in einem ohnehin gesondert zu fertigenden Karosserieteil, oder in Karosseriesäulen angeordnet ist, die beim Einbau der gesondert zu fertigenden Trennwand ohnehin bearbeitet werden müssen. Damit kann die Herstellung der Entlüftungsöffnung im Verlauf solcher Karosseriearbeiten bzw. -herstellungsschritte erfolgen, die bei der Montage des Krankentransportfahrzeuges unabdingbar notwendig sind.

Bei der erfindungsgemäßen Anordnung ist darüber hinaus vorteilhaft, daß die Entlüftungsöffnung zur Druckentlastung der Fahrerkabine in keinem Falle vom Fahrtwind beaufschlagt wird und deshalb auch bei hoher Fahrgeschwindigkeit keinerlei unerwünschte Windgeräusche zu befürchten sind.

Vorzugsweise ist in jeder Entlüftungsöffnung eine Klappenanordnung ähnlich einem Rückschlagventil angeordnet. Dadurch wird die Verschleppung von Krankheitskeimen aus dem Krankentransportraum in die Fahrerkabine auch bei Einbau der Entlüftungsöffnung in der Trennwand sicher verhindert.

Da jedoch der Krankentransportraum in der Regel zwangsentlüftet wird, kann beim Einsatz des Fahrzeuges eine von der Fahrerkabine über die Entlüftungsöffnung in den Krankentransportraum führende Luftströmung entstehen, die allein oder zusätzlich zur gegebenenfalls angeordneten Klappenanordnung einem Eindringen der Krankheitskeime in die Fahrerkabine entgegenwirkt.

Der Krankentransportraum ist zweckmäßigerweise über eine eigene Klappen- bzw. Entlüftungsanordnung nach außen entlüftbar. Für eine funktionsfähige Druckentlastung der Fahrerkabine ist dies jedoch auch dann nicht unbedingt notwendig, wenn die Entlüftungsöffnung der Fahrerkabine in den Krankentransportraum mündet, da derselbe ein großes Volumen hat und dementsprechend beim Zuschlagen von Türen der Fahrerkabine im Gesamtinnenraum des Krankentransportfahrzeuges nur ein relativ geringer Überdruck entstehen kann.

Falls für die eigene Klappen- bzw. Entlüftungsanordnung des Krankentransportraumes nicht eine serienmäßige Anordnung in serienmäßigen Karosserieteilen eines die Basis des Krankentransportfahrzeuges bildenden Personenkraftfahrzeuges od.dgl. in zweckmäßiger Weise herangezogen werden kann, ist in vorteilhafter Ausgestaltung der Erfindung vorgesehen, die eigene Klappen- bzw. Entlüftungsanordnung des Krankentransportraumes in Sonderkarosserieteilen anzuordnen, welche zum Umbau eines Basisfahrzeuges in das Krankentransportfahrzeug dienen. Damit wird in jedem Falle gewährleistet, daß nur möglichst wenige Karosserieteile bearbeitet werden müssen.

Die Entlüftungsöffnung bzw. Klappenanordnung der Fahrerkabine kann in der eigentlichen Trennwand, beispielsweise dicht über dem Fahrzeugboden, vorgesehen sein; jedoch ist auch eine Anordnung in einem Trennwandteil möglich, welches einen gegebenenfalls über der Fahrerkabine angeordneten, vom Krankentransportraum zugänglichen Ablagekasten, z.B. unter dem Dach des Fahrzeuges, von der Fahrerkabine abtrennt.

Die Klappenanordnung kann eine vollständig vormontierbare Einheit bilden, beispielsweise in Form eines rohrförmigen Stutzens, welcher in eine entsprechende Öffnung eines Karosserieteiles, z.B. der Trennwand, eingesetzt und gegenüber dem Karosserieteil durch eine Dichtung abgedichtet wird, die beim Einsetzen des Stutzens in die Öffnung zwischen dem Karosserieteil und einem am Stutzen angeordneten bzw. angeformten Kragen eingespannt wird.

Zur Halterung des Stutzens können widerhakenartige Elemente vorgesehen sein, welche beim Einschieben des Stutzens elastisch nachgeben und bei eingesetztem Stutzen das Karosserieteil auf der vom Kragen abgewandten Seite mit - durch die eingespannte Dichtung vermittelter - Spannung übergreifen.

Nachfolgend wird die Erfindung anhand der Zeichnung erläutert. Dabei zeigt

Fig. 1   eine Ansicht einer zwischen Fahrerkabine und Krankentransportraum angeordneten Trennwand vom Krankentransportraum aus und

Fig. 2   ein Schnittbild einer in der Trennwand angeordneten Klappenanordnung gemäß Schnitt II-II ·in Fig. 1.

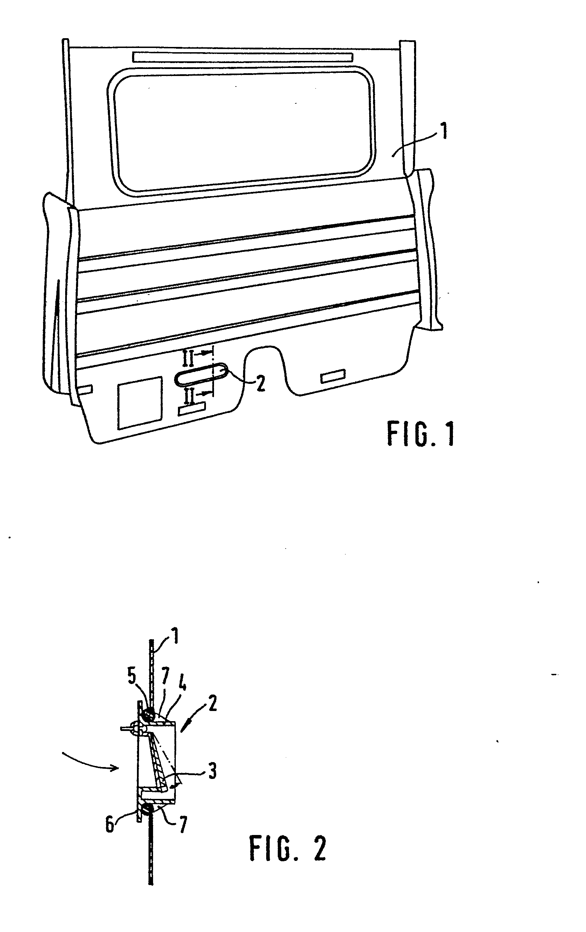

Die in Figur 1 dargestellte Trennwand 1 ist nahe bei nicht dargestellten Säulen eines die Basis für ein Krankentransportfahrzeug bildenden Personenkraftwagens in Fahrtrichtung hinter der Fahrer- sowie der Beifahrertür dieses Personenkraftwagens angeordnet, derart, daß eine Fahrerkabine gebildet und vom dahinter angeordneten Krankentransportraum abgetrennt wird. Der Krankentransportraum kann über Entlüftungsöffnungen od.dgl. nach außen entlüftet werden, derart, daß ein Überdruck im Innenraum nicht entstehen kann.

Zur Verhinderung eines Überdruckes in der Fahrerkabine, insbesondere beim Zuschlagen der Türen, kann die Fahrerkabine über eine Klappenanordnung 2 in den Krankentransportraum hinein entlüftet werden.

Dabei ist die Klappe 3 nach Art eines Rückschlagventiles angeordnet, derart, daß eine Entlüftung der Fahrerkabine in den Krankentransportraum hinein möglich, eine Luftströmung in umgekehrter Richtung jedoch unterbunden ist.

Die Klappe 3 ist innerhalb eines rohrförmigen Stutzens 4 angeordnet, welcher sich in eine entsprechende Öffnung der Trennwand 1 oder eines sonstigen Karosserieteiles einsetzen läßt. Zur Abdichtung des Stutzens 4 in der Öffnung dient eine Dichtung 5, welche zwischen der Trennwand 1 und einem am Stutzen 4 angeformten flanschartigen Kragen 6 eingespannt ist. Zur Halterung des Stutzens 4 in der Öffnung dienen Widerhakenelemente 7, welche beim Einschieben des Stutzens in die Öffnung elastisch zurückweichen und bei hinreichend weit in die Öffnung eingeschobenem Stutzen 4 die Trennwand 1 auf der vom Kragen 6 abgewandten Seite übergreifen. Dabei liegen die Widerhakenelemente 7 an der Trennwand 1 unter Spannung an, welche durch die in Einbaulage des Stutzens 4 elastisch verformte Dichtung 5 vermittelt wird.

Der Stutzen 4 kann zusammen mit dem Kragen 6 als
Kunststoffteil ausgeformt sein, welches gegebenenfalls
mit der Klappe 3 einstückig verbunden oder auch gemeinsam mit dieser hergestellt sein kann.

0154140

Patentansprüche

1. Krankentransportfahrzeug mit vom Krankentransportraum durch eine Trennwand (1) abgeteilter und durch
separate Schwenkflügeltür bzw. -türen von außen
zugänglicher Fahrerkabine, dadurch gekennzeichnet,
daß die Fahrerkabine - zum Druckausgleich beim
Zuschlagen der Schwenkflügeltür bzw. -türen -
mittels zumindest einer Entlüftungsöffnung entlüftbar ist, welche in der Trennwand (1) und/oder zumindest einer die Trennwand abstützenden Karosseriesäule
(z.B. B-Säule) angeordnet ist und in den Krankentransportraum bzw. die Säule mündet.

2. Krankentransportfahrzeug nach Anspruch 1, dadurch
gekennzeichnet, daß in der Entlüftungsöffnung eine
nach Art eines Rückschlagventiles ausgebildete, nach
außen öffnende Klappenanordnung (2) angeordnet ist.

3. Krankentransportfahrzeug nach einem der Ansprüche 1
oder 2, dadurch gekennzeichnet, daß der Krankentransportraum über eine eigene Klappen- bzw. Entlüftungsanordnung nach außen entlüftbar ist.

4. Krankentransportfahrzeug nach Anspruch 3, dadurch
gekennzeichnet, daß die Klappen- bzw. Entlüftungsanordnung des Krankentransportraumes durch eine
serienmäßige Anordnung in serienmäßigen Karosserieteilen eines die Basis des Krankentransportfahrzeuges
bildenden Personenkraftfahrzeuges gebildet wird.

5. Krankentransportfahrzeug nach Anspruch 3, dadurch
gekennzeichnet, daß die Klappen- bzw. Entlüftungsanordnung des Krankentransportraumes in Sonderkarosserieteilen angeordnet ist, die zum Umbau eines
Basisfahrzeuges in das Krankentransportfahrzeug dienen.

6. Krankentransportfahrzeug nach einem der Ansprüche 1 bis 5, dadurch gekennzeichnet, daß die Entlüftungsöffnung bzw. Klappenanordnung (2) der Fahrerkabine in einem Teil der Trennwand (1) angeordnet ist, welches einen über der Fahrerkabine angeordneten, vom Krankentransportraum zugänglichen Ablagekasten von der Fahrerkabine abtrennt.

7. Krankentransportfahrzeug nach einem der Ansprüche 2 bis 6, dadurch gekennzeichnet, daß die Klappenanordnung an bzw. in einem rohrförmigen Stutzen (4) angeordnet ist, welcher in eine entsprechende Öffnung eines Karosserieteiles (1) einsetzbar und gegenüber dem Karosserieteil (1) durch eine Dichtung (5) abgedichtet ist, welche zwischen dem Karosserieteil (1) und einem am Stutzen (4) angeordneten bzw. angeformten Kragen (6) eingespannt ist.

8. Krankentransportfahrzeug nach Anspruch 7, dadurch gekennzeichnet, daß am Stutzen (4) widerhakenartige Elemente (7) angeordnet sind, welche beim Einschieben des Stutzens (4) in die Öffnung elastisch nachgeben und bei eingesetztem Stutzen (4) das Karosserieteil (1) auf der vom Kragen (6) abgewandten Seite mit - durch die eingespannte Dichtung (5) vermittelter - Spannung übergreifen.

FIG. 1

FIG. 2